# FASCICULE DE BREVET EUROPEEN

(11) **EP 1 447 301 B1**
(45) Date de publication et mention de la délivrance du brevet: **31.08.2011**
(21) Numéro de dépôt: 04290389.8
(22) Date de dépôt: 12.02.2004
(51) Int. Cl.: B62B 9/08

(54) **Poussette à moyens de commande de blocage et du déblocage du freinage séparés et placés au voisinage les uns des autres**
Kinderwagen mit Steuermittel zum Ver- und Entriegeln von Bremsanlagen, diese Mittel sind getrennt und in Nähe voneinander
Pushchair with control means for locking and unlocking the brakes, said means being apart and in the vicinty of each other

(30) Priorité: 12.02.2003 FR 0301700
(43) Date de publication de la demande: 18.08.2004
(73) Titulaire: Dorel France SA, 49309 Cholet (FR)
(72) Inventeur: Zweideck, Bruno, 49300 Cholet (FR)
(74) Mandataire: Bioret, Ludovic

(56) Documents cités:
- DE-U- 9 411 371
- DE-U- 29 502 418
- FR-A- 2 631 918
- FR-A- 2 739 347
- FR-A- 2 794 413
- GB-A- 2 281 110
- GB-A- 2 293 420
- US-A- 4 567 964
- US-A1- 2001 013 688

## Description

Le domaine de l'invention est celui de la puériculture, et plus précisément des voitures d'enfant (appelées par la suite « poussettes », ce terme englobant ici tous les dispositifs de puériculture munis de roues et permettant le transport d'un ou plusieurs enfants). Plus précisément encore, l'invention concerne les moyens de blocage/déblocage de roues, et leur commande associée, utilisés lorsque la poussette est stationnée.

Les poussettes ont, le plus souvent, quatre roues, ou blocs de roues, montés respectivement à l'extrémité de piétement du châssis de la poussette, ou aux extrémités d'un axe transversal monté libre en rotation sur le châssis.

Il a également été proposé des poussettes à trois roues.

Qu'elles aient quatre ou trois roues (ou bloc de roues), les poussettes sont généralement conçues de façon à présenter à l'arrière, (du côté du guidon), au moins deux roues réparties de part et d'autre de l'axe longitudinal de la poussette. Une ou plusieurs de ces roues est souvent pourvue de moyens de blocage en vue de s'assurer de l'immobilisation de la poussette lorsque celle-ci est stationnée, y compris lorsqu'elle est placée sur un terrain en pente.

Pour assurer une immobilisation satisfaisante, il a été proposé de bloquer au moins les deux roues (ou blocs de roues) arrières (du côté du guidon) plutôt qu'une seule de celles-ci. En effet, quand une seule des roues est bloquée, la poussette risque, dans certaines conditions, de pivoter autour de cette roue.

Pour éviter ce phénomène, il a donc été proposé des poussettes équipées d'un dispositif de blocage/déblocage agissant simultanément sur deux roues distantes.

Selon une technique particulière de mise en oeuvre de cette approche, il est prévu qu'un élément de manoeuvre est placé près de chaque roue du mécanisme de freinage associé, l'un assurant le blocage et l'autre assurant le déblocage.

Plus précisément, les deux éléments de manoeuvre sont raccordés l'un à l'autre, et aux mécanismes de blocage/déblocage, de sorte que les deux mécanismes de blocage/déblocage soient serrés (poussette immobilisée) lorsqu'un premier élément de manoeuvre est manoeuvré, et que les deux mécanismes de blocage/déblocage soient desserrés lorsque l'autre élément de manoeuvre est manoeuvré.

On comprend donc qu'il est nécessaire de prévoir des moyens de raccordement des éléments de manoeuvre entre eux, et des moyens de raccordement de chacun des éléments de manoeuvre aux mécanismes de blocage/déblocage.

Chaque élément de manoeuvre doit par conséquent agir non seulement sur les mécanismes de blocage/déblocage, mais également sur l'autre élément de manoeuvre.

L'ensemble forme donc un ensemble complexe, dont le montage ainsi que le réglage peuvent s'avérer longs et fastidieux. Ceci a évidemment une conséquence sur le coût de la poussette.

Par ailleurs, si cette approche présente un intérêt esthétique, (les deux commandes réparties ont le même aspect, ce qui permet de conserver une symétrie visuelle), elle est peu ergonomique, puisque la symétrie introduit souvent une confusion dans l'esprit de l'utilisateur qui ne sait plus quelle est la commande pour le freinage ou le déblocage.

Le document US 2001/0013688 représente l'art antérieur le plus proche, et décrit une poussette comportant les caractéristiques du préambule de la revendication 1.

L'invention a notamment pour objectif de pallier les inconvénients de l'art antérieur.

Plus précisément, l'invention a pour objectif de proposer une poussette équipée des moyens de blocage/déblocage simultanément de deux roues faciles à mettre en oeuvre.

En ce sens, l'invention a notamment pour objectif de fournir une telle poussette dans laquelle le dispositif de blocage/déblocage des roues soit plus simple à monter et/ou à régler que les solutions de l'art antérieur.

L'invention a également pour objectif de fournir une telle poussette dans laquelle les éléments de manoeuvre du blocage et du déblocage des roues soient ergonomiques, et en particulier faciles d'utilisation.

L'invention a aussi pour objectif de fournir une telle poussette ayant un dispositif de blocage/déblocage des roues fiable et durable, et peu sujet aux détériorations dues à des chocs ou à un encrassement éventuels.

Ces objectifs ainsi que d'autres qui apparaîtront par la suite sont atteints grâce à l'invention qui a pour objet une poussette du type comprenant un châssis porté par au moins trois roues, au moins deux desdites roues étant montés de part et d'autre dudit châssis, des moyens de blocage/déblocage étant prévus sur chacune desdites deux roues et étant reliés entre eux de façon à agir simultanément. La poussette comprend d'une part des moyens de commande du blocage et d'autre part des moyens de commande du déblocage, distincts desdits moyens de commande du blocage, lesdits moyens de commande du blocage et lesdits moyens de commande du déblocage étant montés au voisinage d'une même roue.

Contrairement à l'art antérieur, les éléments de manoeuvre du blocage et ceux pour le déblocage sont réunis au voisinage d'une même roue, tout en restant séparés les uns des autres.

On évite ainsi la nécessité de multiples moyens de raccordements à distance des organes fonctionnels, entraînant une simplification notable du montage et/ou du réglage du dispositif de blocage/déblocage, ce qui conduit à en réduire les coûts. On évite également des risques de confusion entre les commandes.

Selon une solution préférée, la poussette comprend des moyens de maintien en position de blocage desdits moyens de commande du blocage, lesdits moyens de commande du déblocage agissant sur lesdits moyens de maintien en vue de débloquer lesdites roues.

Ainsi, seul un des deux moyens de commande agit directement sur les moyens de blocage, ce qui simplifie considérablement l'ensemble du dispositif.

Les moyens de commande du déblocage agissent seulement sur les moyens de maintien pour libérer la poussette de sa position de blocage.

Ces différents moyens étant, selon l'invention, directement au voisinage les uns des autres, les moyens de commande du déblocage agissent directement sur les moyens de maintien, sans qu'il soit nécessaire de prévoir des moyens de transmission ou de raccordement.

De plus, on obtient une commande de type « à effet mémoire ». En d'autres termes, une fois la commande de blocage actionnée, le frein est déclenché et reste en position de blocage. Une telle commande est donc particulièrement pratique à utiliser.

Selon une solution préférée, lesdits moyens de maintien coopèrent avec des moyens de transmission du blocage/déblocage de ladite roue au voisinage de laquelle sont montés lesdits moyens de commande du blocage et lesdits moyens de commande du déblocage vers la deuxième desdites deux roues.

On transmet ainsi de façon simple et efficace à la deuxième roue concernée la commande de blocage, en vue de bloquer les deux roues simultanément ou presque.

Dans ce cas, lesdits moyens de transmission agissent sur un deuxième levier pivotant monté au voisinage de ladite deuxième roue, ledit deuxième levier pivotant portant au moins un ergot susceptible de s'engrener avec au moins une roue dentée solidaire de l'axe de rotation de ladite deuxième roue en vue de bloquer celle-ci.

Le mécanisme de blocage de la roue ne portant pas les moyens de commande apparaît ainsi de conception et de fonctionnement similaire à celui décrit pour la roue portant les moyens de commande.

Les gammes de montage correspondantes peuvent par conséquent être présentées de façons similaires.

Préférentiellement, la poussette comprend une première pédale présentant au moins un cran de blocage destiné à coopérer avec lesdits moyens de maintien en position de blocage, et une deuxième pédale qui, lorsqu'elle est actionnée, désengage ledit cran de blocage desdits moyens de maintien.

On obtient ainsi une mécanisme de conception simple et efficace, et très pratique et ergonomique à utiliser, une pédale spécifique servant clairement au blocage tandis que l'autre sert au déblocage des roues.

De plus, comme cela va apparaître plus clairement par la suite, le déblocage, comme le blocage, peut être obtenu par une action simple, voire naturelle, consistant à appuyer (à l'aide du pied ou de la main) sur un bouton ou une pédale.

Le fait de pouvoir débloquer en appuyant s'avère avantageux par rapport à certaines solutions de l'art antérieur, selon lesquelles il faut passer le pied sous la pédale, puis déplacer ou pivoter celle-ci vers le haut pour obtenir le déblocage. Ces solutions classiques engendrent en effet plusieurs conséquences regrettables :
- les pédales de ce type usent, voire endommagent les chaussures, l'actionnement étant effectué avec le dessus de la pointe de la chaussure (pour exercer un effort du bas vers le haut) ; or, les chaussures ne sont généralement pas prévues pour un tel contact éventuellement répété et le cuir ou le tissu de celles-ci peut être agressé par la pédale ;
- le contact de la pédale sur le pied peut s'avérer désagréable, voire douloureux, en particulier lorsque l'utilisateur porte des chaussures ouvertes ou légères.

Avantageusement, lesdits moyens de commande du blocage sont couplés à des moyens de rappel tendant à ramener lesdits moyens de commande du blocage en position de déblocage.

L'utilisateur dispose ainsi d'une assistance au déblocage des roues de la poussette lorsqu'il actionne la pédale correspondante.

Préférentiellement, lesdits moyens de maintien comprennent un levier pivotant présentant une échancrure formant logement pour ledit cran de ladite première pédale.

Dans ce cas, ledit levier pivotant peut porter des moyens de blocage de ladite roue au voisinage de laquelle sont montés lesdits moyens de commande du blocage et lesdits moyens de commande du déblocage.

Le levier a de cette façon une double fonction : celle de maintenir la position de blocage de la pédale correspondante et celle d'assurer directement le blocage de la roue correspondante.

A nouveau, un tel agencement permet de réduire le nombre de pièces à mettre en oeuvre, et par conséquent d'en simplifier le montage.

Selon une solution avantageuse, ledit levier pivotant porte au moins un ergot susceptible de s'engrener avec au moins une roue dentée solidaire de l'axe de rotation de ladite roue.

Préférentiellement, ladite première pédale est montée à pivotement sur ledit châssis.

Bien entendu, d'autres modes de réalisation sont envisageables sans sortir du cadre de l'invention, notamment en prévoyant par exemple une pédale de blocage mobile à coulissement.

Toutefois, le montage pivotant de la pédale présente l'intérêt d'être moins fragile, notamment du fait qu'il subit de façon moindre les effets d'un encrassement éventuel.

Avantageusement, lesdits moyens de transmission comprennent au moins un câble dont une extrémité porte un téton retenu dans un logement dudit levier pivotant.

A nouveau, un tel agencement permet de simplifier considérablement le montage et d'en réduire la durée.

Selon une autre caractéristique avantageuse, ledit deuxième levier est couplé à des moyens de rappel tendant à le ramener en position de déblocage.

On évite ainsi que le déblocage de la roue portant les moyens de commande soit contraint par le blocage de l'autre roue, notamment en cas de coincement du mécanisme de celle-ci.

Selon une autre caractéristique avantageuse, les roues arrières et/ou les roues avants sont chacune portées par une chape montée en porte à faux sur ledit châssis, en l'absence d'essieu entre elles.

On peut ainsi supprimer la traverse classiquement montée entre les roues des poussettes, cette traverse ayant pour effet de réduire la garde au sol de la poussette.

De plus, un tel agencement permet d'augmenter les possibilités de pliage de la poussette, en particulier les pliages en « fagot », en l'absence de traverse entre les roues.

Avantageusement, lesdites chapes sont préférentiellement montées libres à coulissement sur le piétement correspondant du châssis ou sur un élément solidaire de ce piétement, la poussette comprenant, selon une solution préférée, des moyens amortisseurs de charge placés sur le chemin de coulissement de desdites chapes par rapport auxdits piétements ou auxdits éléments solidaires de ceux-ci.

Avantageusement, la poussette comprend une bague de guidage du coulissement de ladite chape par rapport audit piétement ou audit élément solidaire de celui-ci, ladite bague étant préférentiellement solidaire d'une coque renfermant au moins partiellement ladite chape.

Dans ce cas, ladite coque renferme préférentiellement également lesdits moyens de blocage et/ou supporte lesdits moyens de commande du blocage et du déblocage.

Le mécanisme de blocage/déblocage est ainsi carené par la coque (qui peut être constituée de deux demi-coques assemblées pour en faciliter le montage), ce qui limite les risques de détérioration dus à des chocs où à un encrassement éventuel.

Avantageusement, lesdits moyens amortisseurs sont montés entre ladite bague ou ladite coque et une portion tronconique du piétement ou d'un élément solidaire de celui-ci.

D'autres caractéristiques et avantages de l'invention apparaîtront plus clairement à la lecture de la description suivante d'un mode de réalisation préférentiel d'une poussette selon l'invention, donné à titre d'exemple illustratif et non limitatif, et des dessins annexés parmi lesquels :
- la figure 1 est une vue d'ensemble du dispositif de blocage/déblocage des roues d'une poussette selon l'invention ;
- les figures 2 et 4 sont des vues du mécanisme de blocage/déblocage de la roue portant les moyens de commande, respectivement en position débloquée et en position bloquée ;
- les figures 3 et 5 sont des vues du mécanisme de blocage/déblocage de la roue ne portant pas les moyens de commande, respectivement en position débloquée et en position bloquée.

Comme mentionné précédemment, le principe de l'invention repose sur la mise en oeuvre au voisinage d'une même roue, des moyens de commande du blocage et de ceux du déblocage, agissant simultanément sur deux roues.

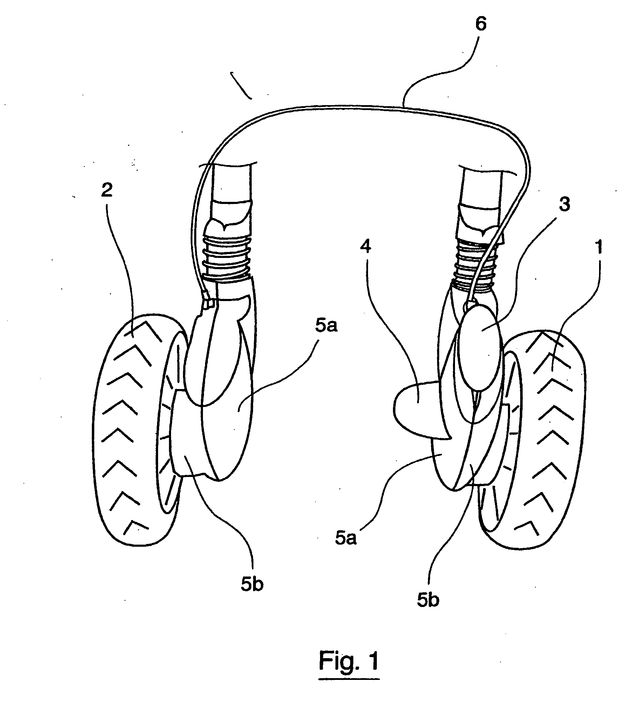

Cette approche apparaît clairement sur la figure 1 qui illustre un dispositif de blocage/déblocage agissant simultanément sur deux roues 1, 2 et comprenant selon l'invention, une pédale 3 de commande de blocage des roues 1 et 2 et une pédale 4 de commande du déblocage, ces pédales 3 et 4 étant montées au voisinage d'une même roue 1.

Selon le présent mode de réalisation, chacun des mécanismes de blocage/déblocage est caréné par deux demi-coques.

Le blocage et le déblocage est obtenu de façon simultanée sur les roues 1 et 2, en reliant les mécanismes internes aux deux demi-coques 5a et 5b par un câble 6, comme cela va être expliqué plus en détail par la suite.

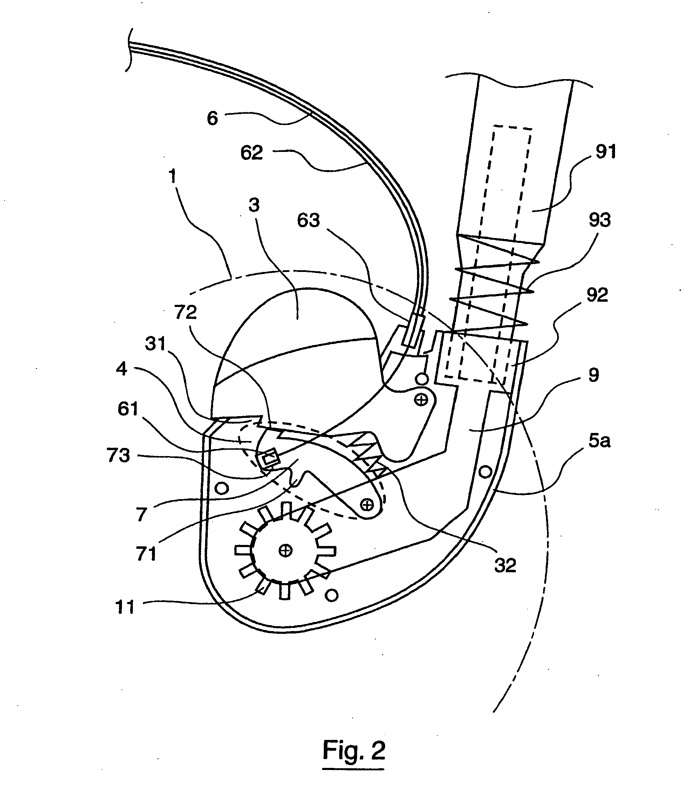

En référence à la figure 2, la pédale 3 est montée à pivotement sur une des demi-coques 5a de façon à agir, lorsqu'elle est actionnée, sur un premier levier 7 également pivotant et destiné à assurer le blocage de la roue 1.

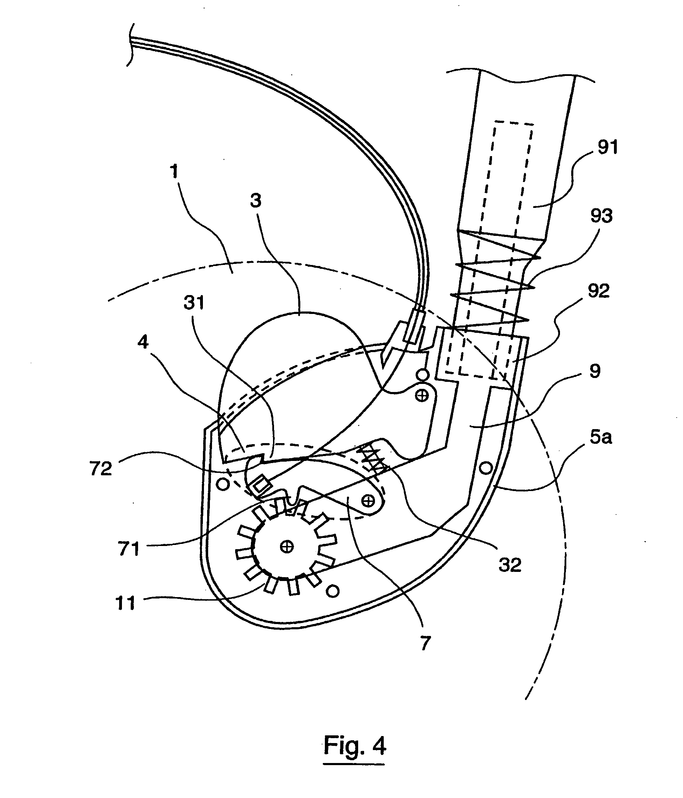

Pour ce faire, le levier 7 porte un ergot 71 destiné à s'engrener avec une roue dentée 11 solidaire en rotation de l'axe de rotation de la roue 1, le levier 7 coopérant avec cette roue dentée 11 pour bloquer la roue 1 de la façon illustrée par la figure 4.

Par ailleurs, le levier 7 présente une échancrure 72 destinée à coopérer avec un cran 31 ménagé sur la pédale 3 en vue de maintenir celle-ci en position de blocage, le levier 7 et la pédale 3 occupant alors une position illustrée par la figure 4.

En outre, le levier 7 et la pédale 4 (apparaissant en traits pointillés sur les figures 2 et 4) sont montés l'un par rapport à l'autre de façon à être solidarisés en rotation, la pédale 4 étant destinée, lorsqu'elle est actionnée, à désengager le cran 31 de l'échancrure 72 en vue de permettre le retour de l'ensemble à une position de déblocage.

On note que le mécanisme comprend un ressort 32 couplé à la pédale 3 de sorte que le ressort 32 travaille en compression lorsque la pédale 3 est actionnée.

Par ailleurs, la transmission des commandes de blocage et de déblocage des roues 1 et 2 entre elles est assurée par un câble 6 comme déjà mentionné. Une première extrémité du câble portant un téton 61 retenu dans un logement 73 du levier 7, et l'autre extrémité du câble portant également un téton 62 retenu dans un logement 81 d'un levier 8 formant moyen de blocage de la roue 2.

Ce câble 6 est susceptible de coulisser dans une gaine 62 retenue à ses extrémités dans les demi-coques correspondantes à l'aide d'oeillets 63.

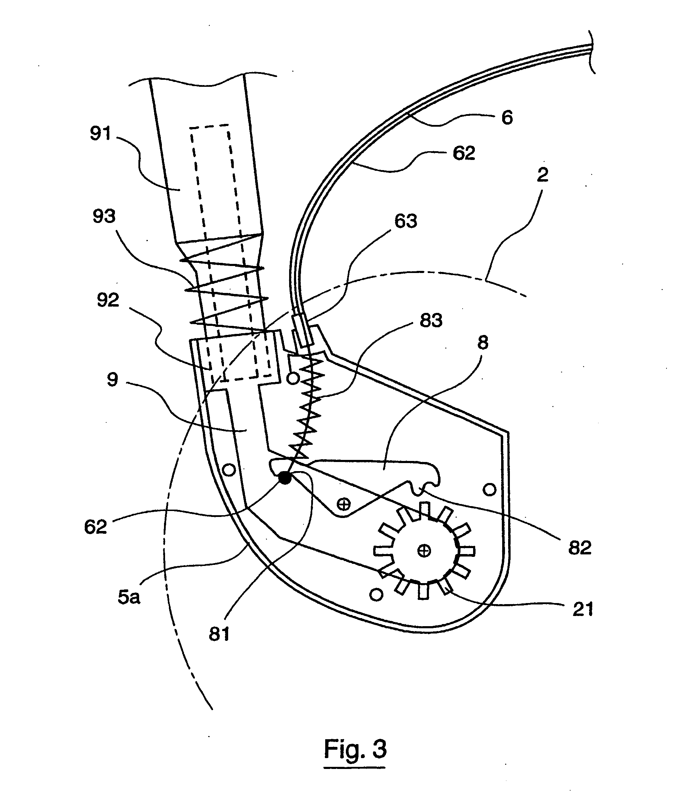

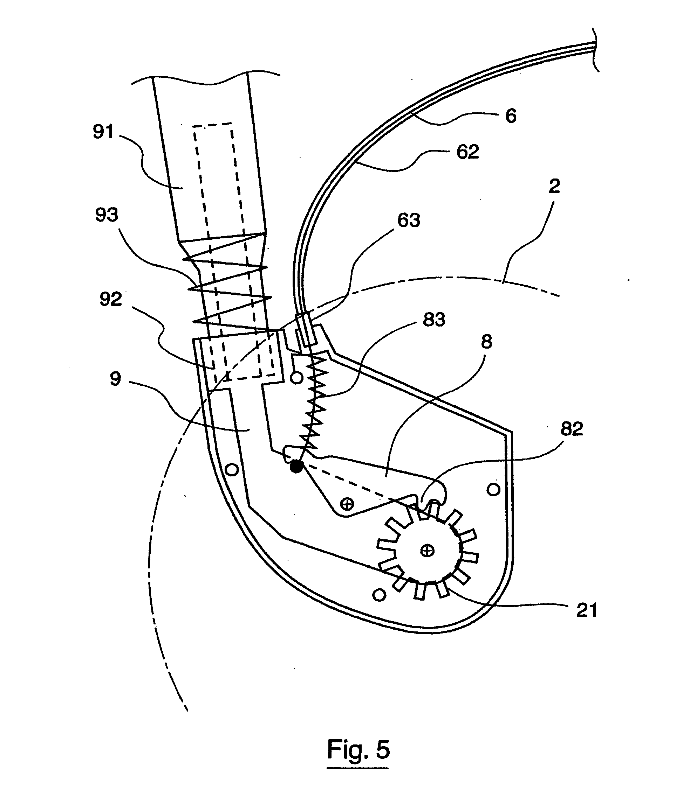

En référence aux figures 3 et 5, le mécanisme de blocage/déblocage de la roue 2 comprend un levier 8 comme on vient de l'indiquer, ce levier 8 étant monté pivotant sur l'une des demi-coques 5a et présentant un ergot 82 destiné à s'engrener avec une roue dentée 21 solidaire en rotation de l'axe de rotation de la roue 2, le levier 8 coopérant avec cette roue dentée 21 pour bloquer la roue 2 de la façon illustrée par la figure 5.

On note que le mécanisme de blocage/déblocage de la roue 2 comprend un ressort 83 couplé au levier 8 de telle sorte que le ressort 83 travaille en compression lorsque le levier 8 occupe une position de blocage.

Le fonctionnement de l'ensemble du dispositif de blocage/déblocage des roues 1 et 2, et des commandes associées, va maintenant être explicité en référence aux figures 2 à 5.

Selon une position initiale illustrée par les figures 2 et 3, les leviers 7 et 8 sont désengagées respectivement des roues dentées 11 et 21, la poussette étant par conséquent en situation non bloquée.

Lorsque la pédale 3 est actionnée, c'est-à-dire poussée vers le bas, elle appuie à l'encontre de la poussée imprimée par le ressort 32 sur le levier 7 et entraîne son pivotement vers le bas également. Les surfaces de la pédale 3 et du levier 7 en contact l'une de l'autre, glissent l'une sur l'autre du fait des pivotements respectifs de la pédale et du levier, jusqu'à ce que le cran 31 de la pédale 3 s'engage dans l'échancrure 72 du levier 7, ce dernier maintenant alors la pédale 3 dans la position illustrée par la figure 4.

Dans le même temps, le pivotement du levier 7 provoque l'engagement de son ergot 71 dans un des crénelages de la roue dentée 11, provoquant le blocage de la roue 1.

Parallèlement, le pivotement du levier 7 entraîne le coulissement du câble 6 à l'intérieur de la gaine 62, équivalent à un déplacement de celui-ci de la roue 2 vers la roue 1.

En conséquence, au niveau de la roue 2, le levier 8 pivote à l'encontre de la poussée imprimée par le ressort 83, de façon que l'ergot 82 qu'il présente s'engage avec un des crénelages de la roue dentée 21, provoquant le blocage de la roue 2, simultanément, ou presque, à celui de la roue 1.

Le déblocage des roues 1 et 2 est obtenu de la manière suivante.

En appuyant sur la pédale 4 solidaire du levier 7, ce dernier pivote vers le bas en s'éloignant de la pédale 3 jusqu'à ce que le cran 31 se désengage de l'échancrure 72 du levier 7. La pédale 3 n'étant plus retenue par le levier 7, seule la poussée du ressort 32 s'exerce sur la pédale 3, entraînant le retour de celle-ci à une position de déblocage.

Parallèlement, le levier 7 n'étant plus contraint en position par la pédale 3 (et dans la mesure où l'action sur la pédale 4 est relâchée), le câble 6 est libre de se déplacer, son déplacement étant provoqué, du côté de la roue 2, par le ressort 83 qui repousse le levier 8 vers sa position de déblocage. Le coulissement du câble 6 équivaut alors à un déplacement de la roue 1 vers la roue 2, le câble 6 tirant par conséquent, par l'intermédiaire de son téton 61, le levier 7 vers le haut (vers la position illustrée par la figure 2) et provoquant le déblocage de la roue 1, et simultanément, ou quasi-simultanément, celui de la roue 2.

Selon une autre caractéristique de l'invention, les roues de la poussette sont supportées en porte-à-faux par le châssis, sans essieu ou traverse entre elles, comme illustré clairement par la figure 1.

On note que les roues citées dans la présente description sont préférentiellement les roues arrières de la poussette selon le sens de roulage de celle-ci, c'est-à-dire celles du côté du guidon de la poussette. On rappelle par ailleurs que le terme «roue » englobe le cas d'un bloc de deux (ou plus) roues.

Toutefois, le montage en porte-à-faux des roues qui va maintenant être décrit peut concerner tant les roues avant que les roues arrière.

Pour obtenir un tel montage, l'axe de rotation des roues est supporté par une chape mécano-soudée 9, coudée de façon à s'étendre de l'axe de rotation des roues ves le piétement correspondant, puis coaxialement à ce dernier.

Un manchon 91 est monté à l'extrémité de chaque piétement, la chape 9 et ce manchon 91 étant prévus et montés pour pouvoir coulisser l'un dans l'autre, ce coulissement étant par ailleurs guidé par une bague 92 maintenue dans des logements prévus à cet effet dans les demi-coques 5a et 5b.

On note que le manchon 91 présente une portion tronconique (un épaulement pouvant également convenir selon un autre mode de réalisation envisageable) formant surface d'appui pour un ressort 93 formant amortisseur, l'autre extrémité de ce ressort venant en appui sur la bague 92 et/ou sur les demi-coques 5a, 5b.

## Revendications

1. Poussette, comprenant un châssis porté par au moins trois roues, au moins deux desdites roues (1), (2) étant montées de part et d'autre dudit châssis, des moyens de blocage/déblocage étant prévus sur chacune desdites deux roues et étant reliés entre eux de façon à agir simultanément,
**caractérisée en ce qu'**elle comprend d'une part des moyens de commande du blocage (3) et d'autre part des moyens de commande du déblocage (4), distincts desdits moyens de commande du blocage (3), lesdits moyens de commande du blocage (3) et lesdits moyens de commande du déblocage (4) étant montés au voisinage d'une même roue (1).

2. Poussette selon la revendication 1, **caractérisée en ce qu'**elle comprend des moyens de maintien (72) en position de blocage desdits moyens de commande du blocage (3), et **en ce que** lesdits moyens de commande du déblocage (4) agissent sur lesdits moyens de maintien en vue de débloquer lesdites roues.

3. Poussette selon la revendication 2, **caractérisée en ce que** lesdits moyens de maintien coopèrent avec des moyens de transmission du blocage/déblocage de ladite roue au voisinage de laquelle sont montés lesdits moyens de commande du blocage (3) et lesdits moyens de commande du déblocage (4) vers la deuxième desdites deux roues (2).

4. Poussette selon la revendication 3, **caractérisée en ce que** lesdits moyens de transmission agissent sur un deuxième levier pivotant (8) monté au voisinage de ladite deuxième roue (2), ledit deuxième levier pivotant portant au moins un ergot (82) susceptible de s'engrener avec au moins une roue dentée (21) solidaire de l'axe de rotation de ladite deuxième roue (2) en vue de bloquer celle-ci.

5. Poussette selon l'une quelconque des revendications 1 à 4, **caractérisée en ce qu'**elle comprend une première pédale (3) présentant au moins un cran de blocage (31) destiné à coopérer avec lesdits moyens de maintien en position de blocage, et une deuxième pédale (4) qui, lorsqu'elle est actionnée, désengage ledit cran de blocage (31) desdits moyens de maintien.

6. Poussette selon l'une quelconque des revendications 2 à 5, **caractérisée en ce que** lesdits moyens de commande du blocage (3) sont couplés à des moyens de rappel (32) tendant à ramener lesdits moyens de commande du blocage (3) en position de déblocage.

7. Poussette selon l'une quelconque des revendications 5 et 6, **caractérisée en ce que** lesdits moyens de maintien comprennent un levier (7) pivotant présentant une échancrure (72) formant logement pour ledit cran (31) de ladite première pédale (3).

8. Poussette selon la revendication 7, **caractérisée en ce que** ledit levier (7) pivotant porte des moyens de blocage de ladite roue au voisinage de laquelle sont montés lesdits moyens de commande du blocage (3) et lesdits moyens de commande du déblocage (4).

9. Poussette selon la revendication 8, **caractérisée en ce que** ledit levier pivotant (7) porte au moins un ergot (71) susceptible de s'engrener avec au moins une roue dentée (11) solidaire de l'axe de rotation de ladite roue (1).

10. Poussette selon l'une quelconque des revendications 5 à 9, **caractérisée en ce que** ladite première pédale (3) est montée à pivotement sur ledit châssis.

11. Poussette selon l'une quelconque des revendications 3 à 10, **caractérisée en ce que** lesdits moyens de transmission comprennent au moins un câble (6) dont une extrémité porte un téton (61) retenu dans un logement (73) dudit levier pivotant (7).

12. Poussette selon l'une quelconque des revendications 4 à 11, **caractérisée en ce que** ledit deuxième levier (8) est couplé à des moyens de rappel (83) tendant à le ramener en position de déblocage.

13. Poussette selon l'une quelconque des revendications 1 à 12, **caractérisée en ce que** les roues arrières et/ou les roues avants sont chacune portées par une chape (9) montée en porte à faux sur ledit châssis, en l'absence d'essieu entre elles.

14. Poussette selon la revendication 13, **caractérisée en ce que** lesdites chapes (9) montées libres à coulissement sur le piétement correspondant du châssis ou sur un élément (91) solidaire de ce piétement.

15. Poussette selon la revendication 14, **caractérisée en ce qu'**elle comprend des moyens amortisseurs de charge (93) placés sur le chemin de coulissement desdites chapes (9) par rapport auxdits piétements ou auxdits éléments (91) solidaires de ceux-ci.

16. Poussette selon l'une des revendications 14 et 15, **caractérisée en ce qu'**elle comprend une bague de guidage (92) du coulissement de ladite chape (9) par rapport audit piétement ou audit élément solidaire de celui-ci.

17. Poussette selon la revendication 16, **caractérisée en ce que** ladite bague (92) est solidaire d'une coque (5a, 5b) renfermant au moins partiellement ladite chape (9).

18. Poussette selon la revendication 17, **caractérisée en ce que** ladite coque (5a, 5b) renferme également lesdits moyens de blocage et/ou supporte lesdits moyens de commande du blocage et du déblocage.

19. Poussette selon la revendication 15 ou selon l'une des revendications 16 à 18, **caractérisée en ce que** lesdits moyens amortisseurs (93) sont montés entre ladite bague (92) ou ladite coque (5a, 5b) et une portion tronconique du piétement ou d'un élément (91) solidaire de celui-ci.

## Claims

1. Pushchair, comprising a chassis which is carried by at least three wheels, at least two of the wheels (1), (2) being mounted at one side and the other of the chassis, locking/unlocking means being provided on each of the two wheels and being connected to each other in order to act simultaneously,
**characterised in that** the pushchair comprises, on the one hand, locking control means (3) and, on the other hand, unlocking control means (4) which are separate from the locking control means (3), the locking control means (3) and the unlocking control means (4) being mounted in the region of the same wheel (1).

2. Pushchair according to claim 1, **characterised in that** the pushchair comprises means (72) for retaining the locking control means (3) in a locking position, and **in that** the unlocking control means (4) act on the retention means in order to unlock the wheels.

3. Pushchair according to claim 2, **characterised in that** the retention means co-operate with means for transmitting the locking/unlocking action of the wheel, in the region of which there are mounted the locking control means (3) and the unlocking control means (4), towards the second of the two wheels (2).

4. Pushchair according to claim 3, **characterised in that** the transmission means act on a second pivoting lever (8) which is mounted in the region of the second wheel (2), the second pivoting lever carrying at least one stud (82) which is capable of engaging with at least one toothed wheel (21) fixedly joined to the axle of rotation of the second wheel (2) in order to lock it.

5. Pushchair according to any one of claims 1 to 4, **characterised in that** the pushchair comprises a first pedal (3) having at least one locking catch (31) which is intended to co-operate with the means for retention in a locking position and a second pedal (4) which, when it is activated, disengages the locking catch (31) from the retention means.

6. Pushchair according to any one of claims 2 to 5, **characterised in that** the locking control means (3) are connected to return means (32) which tend to move the locking control means (3) into an unlocking position.

7. Pushchair according to either claim 5 or claim 6, **characterised in that** the retention means comprise a pivoting lever (7) which has an indentation (72) forming a housing for the catch (31) of the first pedal (3).

8. Pushchair according to claim 7, **characterised in that** the pivoting lever (7) carries means for locking the wheel, in the region of which there are mounted the locking control means (3) and the unlocking control means (4).

9. Pushchair according to claim 8, **characterised in that** the pivoting lever (7) carries at least one pin (71) which can become engaged with at least one toothed wheel (11) which is fixedly joined to the axle of rotation of the wheel (1).

10. Pushchair according to any one of claims 5 to 9, **characterised in that** the first pedal (3) is mounted for pivoting on the chassis.

11. Pushchair according to any one of claims 3 to 10, **characterised in that** the transmission means comprise at least one cable (6), one end of which carries a pin (61) which is retained in a housing (73) of the pivoting lever (7).

12. Pushchair according to any one of claims 4 to 11, **characterised in that** the second lever (8) is connected to return means (83) which tend to bring it back into an unlocking position.

13. Pushchair according to any one of claims 1 to 12, **characterised in that** the rear wheels and/or the front wheels are each carried by a cap (9) which is mounted in an offset manner on the chassis in the absence of an axle between them.

14. Pushchair according to claim 13, **characterised in that** the caps (9) are mounted so as to slide freely on the corresponding base of the chassis or on an element (91) fixedly joined to that base.

15. Pushchair according to claim 14, **characterised in that** the pushchair comprises load damping means (93) which are positioned on the sliding path of the caps (9) in relation to the bases or elements (91) fixedly joined thereto.

16. Pushchair according to either claim 14 or claim 15, **characterised in that** the pushchair comprises a ring (92) for guiding the sliding of the cap (9) relative to the base or the element fixedly joined thereto.

17. Pushchair according to claim 16, **characterised in that** the ring (92) is fixedly joined to a shell (5a, 5b) which at least partially surrounds the cap (9).

18. Pushchair according to claim 17, **characterised in that** the shell (5a, 5b) also surrounds the locking means and/or supports the locking and unlocking control means.

19. Pushchair according to claim 15 or according to any one of claims 16 to 18, **characterised in that** the damping means (93) are mounted between the ring (92) or the shell (5a, 5b) and a frustoconical portion of the base or an element (91) fixedly joined thereto.

## Patentansprüche

1. Handwagen, umfassend ein Gestell, das von mindestens drei Rädern getragen wird, wobei mindestens zwei dieser Räder (1), (2) beiderseits des Gestells montiert sind, wobei Feststell-/Freigabemittel auf jedem der beiden Räder vorgesehen und miteinander derart verbunden sind, dass sie gleichzeitig wirken,
**dadurch gekennzeichnet, dass** er einerseits Mittel zur Steuerung der Feststellung (3) und andererseits Mittel zur Steuerung der Freigabe (4) umfasst, die sich von den Mitteln zur Steuerung der Feststellung (3) unterscheiden, wobei die Mittel zur Steuerung der Feststellung (3) und die Mittel zur Steuerung der Freigabe (4) in der Nähe eines selben Rades (1) montiert sind.

2. Handwagen nach Anspruch 1, **dadurch gekennzeichnet, dass** er Mittel (72) zum Halten der Mittel zur Steuerung der Feststellung (3) in Feststellposition umfasst, und dass die Mittel zur Steuerung der Freigabe (4) auf die Haltemittel einwirken, um die Räder freizugeben.

3. Handwagen nach Anspruch 2, **dadurch gekennzeichnet, dass** die Haltemittel mit Mitteln zur Übertragung der Feststellung/Freigabe des Rades zusammenwirken, in dessen Nähe die Mittel zur Steuerung der Feststellung (3) und die Mittel zur Steuerung der Freigabe (4) zum zweiten der beiden Räder (2) hin montiert sind.

4. Handwagen nach Anspruch 3, **dadurch gekennzeichnet, dass** die Übertragungsmittel auf einen zweiten Schwenkhebel (8) einwirken, der in der Nähe des zweiten Rades (2) montiert ist, wobei der zweite Schwenkhebel mindestens einen Haken (82) trägt, der in mindestens ein Zahnrad (21) eingreifen kann, das mit der Drehachse des zweiten Rades (2) verbunden ist, um dieses festzustellen.

5. Handwagen nach einem der Ansprüche 1 bis 4, **dadurch gekennzeichnet, dass** er ein erstes Pedal (3), das mindestens eine Feststellraste (31) aufweist, die dazu bestimmt ist, mit den Mitteln zum Halten in Feststellposition zusammenzuwirken, und ein zweites Pedal (4) umfasst, das, wenn es betätigt wird, die Feststellraste (31) aus den Haltemitteln löst.

6. Handwagen nach einem der Ansprüche 2 bis 5, **dadurch gekennzeichnet, dass** die Mittel zur Steuerung der Feststellung (3) mit Rückstellmitteln (32) gekoppelt sind, die darauf hinwirken, die Mittel zur Steuerung der Feststellung (3) in die Freigabeposition zurückzuführen.

7. Handwagen nach einem der Ansprüche 5 und 6, **dadurch gekennzeichnet, dass** die Haltemittel einen Schwenkhebel (7) umfassen, der eine bogenförmige Aussparung (72) aufweist, die eine Lagerung für die Feststellraste (31) des ersten Pedals (3) bildet.

8. Handwagen nach Anspruch 7, **dadurch gekennzeichnet, dass** der Schwenkhebel (7) Mittel zur Feststellung des Rades trägt, in dessen Nähe die Mittel zur Steuerung der Feststellung (3) und die Mittel zur Steuerung der Freigabe (4) montiert sind.

9. Handwagen nach Anspruch 8, **dadurch gekennzeichnet, dass** der Schwenkhebel (7) mindestens einen Haken (71) trägt, der in mindestens ein Zahnrad (11) eingreifen kann, das mit der Drehachse des Rades (1) verbunden ist.

10. Handwagen nach einem der Ansprüche 5 bis 9, **dadurch gekennzeichnet, dass** das erste Pedal (3) schwenkbar auf dem Gestell montiert ist.

11. Handwagen nach einem der Ansprüche 3 bis 10, **dadurch gekennzeichnet, dass** die Übertragungsmittel mindestens ein Kabel (6) umfassen, wobei ein Ende desselben einen Zapfen (61) trägt, der in einer Lagerung (73) des Schwenkhebels (7) gehalten wird.

12. Handwagen nach einem der Ansprüche 4 bis 11, **dadurch gekennzeichnet, dass** der zweite Hebel (8) an Rückstellmittel (83) gekoppelt ist, die darauf hinwirken, ihn in Freigabeposition zurückzuführen.

13. Handwagen nach einem der Ansprüche 1 bis 12, **dadurch gekennzeichnet, dass** die Hinterräder und/oder die Vorderräder jeweils von einem Gabelgelenk (9) getragen werden, das hervorstehend auf dem Gestell montiert ist, wobei zwischen ihnen keine Achse vorhanden ist.

14. Handwagen nach Anspruch 13, **dadurch gekennzeichnet, dass** die Gabelgelenke (9) frei gleitend auf dem entsprechenden Trittbrett des Gestells oder auf einem mit diesem Trittbrett verbundenen Element (91) montiert sind.

15. Handwagen nach Anspruch 14, **dadurch gekennzeichnet, dass** er Lastdämpfungsmittel (93) umfasst, die auf dem Gleitweg der Gabelgelenke (9) in Bezug zu den Trittbrettern oder zu den mit diesen verbundenen Elementen (91) angeordnet sind.

16. Handwagen nach einem der Ansprüche 14 und 15, **dadurch gekennzeichnet, dass** er einen Führungsring (92) für das Gleiten des Gabelgelenks (9) in Bezug zu dem Trittbrett oder zu dem mit diesem verbundenen Element umfasst.

17. Handwagen nach Anspruch 16, **dadurch gekennzeichnet, dass** der Ring (92) mit einer Schale (5a, 5b) verbunden ist, die zumindest teilweise das Gabelgelenk (9) aufnimmt.

18. Handwagen nach Anspruch 17, **dadurch gekennzeichnet, dass** die Schale (5a, 5b) auch die Feststellmittel aufnimmt und/oder die Mittel zur Steuerung der Feststellung und Freigabe trägt.

19. Handwagen nach Anspruch 15 oder einem der Ansprüche 16 bis 18, **dadurch gekennzeichnet, dass** die Dämpfungsmittel (93) zwischen dem Ring (92) oder der Schale (5a, 5b) und einem kegelstumpfartigen Abschnitt des Trittbretts oder eines mit diesem verbundenen Elements (91) montiert sind.
